# EUROPÄISCHE PATENTANMELDUNG

(11) **EP 4 850 513 A1**
(43) Veröffentlichungstag der Anmeldung: **09.12.2026**
(21) Anmeldenummer: 26180606.1
(22) Anmeldetag: 22.05.2026
(51) Int. Cl.: A01B 63/32, A01C 7/20

(54) **TRAGVORRICHTUNG ZUR MONTAGE AN EINEN MASCHINENRAHMEN EINER LANDWIRTSCHAFTLICHEN ARBEITSMASCHINE, LANDWIRTSCHAFTLICHE ARBEITSMASCHINE MIT EINER SOLCHEN TRAGVORRICHTUNG UND VERFAHREN ZUR VERSTELLUNG ZUMINDEST EINER WERKZEUGEINRICHTUNG EINER LANDWIRTSCHAFTLICHEN ARBEITSMASCHINE**

(30) Priorität: 03.06.2025 DE 102025121682
(71) Anmelder: Horsch Maschinen SE & Co. KG, 92421 Schwandorf (DE)
(72) Erfinder: HASELHOFF, Alexander, 92421 Schwandorf (DE); EGELSEER, Bastian, 92421 Schwandorf (DE)
(74) Vertreter: v. Bezold & Partner Patentanwälte - PartG mbB

(57) **Zusammenfassung**

Die Erfindung betrifft eine Tragvorrichtung (10) zur Montage an einen Maschinenrahmen (21) einer landwirtschaftlichen Arbeitsmaschine (20), mit einem Vorrichtungsrahmen (11) zur beweglichen Koppelung an den Maschinenrahmen (21); mit zumindest einer Werkzeugeinrichtung (100) zur Bearbeitung eines Bodens (B) und/oder zur Einbringung eines landwirtschaftlichen Guts in einen Boden (B); mit zumindest einer Verstelleinrichtung (200), welche zur Koppelung der zumindest einen Werkzeugeinrichtung (100) an den Vorrichtungsrahmen (11) und Einstellung einer Lage der zumindest einen Werkzeugeinrichtung (100 ) eine Koppeleinheit (210) und eine Stelleinheit (200) umfasst; wobei die Koppeleinheit (210) an dem Vorrichtungsrahmen (11) gelagert und zur Betätigung durch zumindest ein Aktuatorelement (211) konfiguriert ist, wobei sich das zumindest eine Aktuatorelement (211) an dem Vorrichtungsrahmen (11) abstützt. Die Erfindung betrifft ferner eine landwirtschaftliche Arbeitsmaschine (20) mit zumindest einer Tragvorrichtung (10) sowie ein Verfahren zur Verstellung zumindest einer Werkzeugeinrichtung (100) einer landwirtschaftlichen Arbeitsmaschine (20).

## Beschreibung

Die vorliegende Erfindung liegt auf dem Gebiet der Landtechnik und betrifft eine Tragvorrichtung zur Montage an einen Maschinenrahmen einer landwirtschaftlichen Arbeitsmaschine, eine landwirtschaftliche Arbeitsmaschine mit zumindest einer solchen Tragvorrichtung und ein Verfahren zur Verstellung zumindest einer Werkzeugeinrichtung einer solchen landwirtschaftlichen Arbeitsmaschine.

Landwirtschaftliche Arbeitsmaschinen zur Bearbeitung eines Bodens und/oder zur Einbringung eines landwirtschaftlichen Guts in einen Boden sind beispielsweise mit Säschareinheiten ausgestattet und werden in der Regel über eine Schwinge oder über eine so genannte Parallelogrammführung an einem Träger einer landwirtschaftlichen Arbeitsmaschine, beispielsweise in Form einer Sämaschine, gelagert.

Bei Säschareinheiten, welche jeweils durch eine Schwinge gelagert werden, erfolgt eine Verstellung der Säschareinheit zur Erzielung einer gewünschten Arbeitstiefe durch Verstellung des Trägers der Schwinge, das heißt durch eine Schwenk- und/oder Höhenverstellung des Trägers. Eine solche Verstellung wird in der Regel mittels eines Hydraulikzylinders realisiert. Sobald die Säschareinheit verstellt werden muss, um eine andere gewünschte Arbeitstiefe zu erzielen, ist es ausreichend, den Hub des Hydraulikzylinders zu begrenzen, beispielsweise mittels so genannter Clips.

Allerdings ist beispielsweise bei Säschareinheiten mit Parallelogrammführung eine Einstellung aufwendiger und erfordert sowohl eine Verstellung des Trägers des jeweiligen Rahmens der Säschareinheit als auch eine Verstellung des jeweiligen oberen Lenkers der Parallelogrammführung.

Ungeachtet der Lagerung mittels Schwinge oder Parallelogrammführung kann neben einer Einstellung zur Erzielung einer gewünschten Arbeitstiefe bei den Säschareinheiten ein so genannter Schardruck eingestellt werden. Der Schardruck ist vorzugsweise die Kraft, mittels welcher die Säschareinheit entlang des Bodens geführt wird. Die Einstellung des Schardrucks erfolgt in der Regel ebenfalls über einen Hydraulikzylinder, wobei neben einer Einstellung zur Erzielung einer gewünschten Arbeitstiefe auch der Schardruck eingestellt werden muss, nachdem die Arbeitstiefe und der Schardruck zueinander in Beziehung stehen. Eine Einstellung des Schardrucks erfolgt in der Regel ebenfalls jeweils durch eine Schwenk- und/oder Höhenverstellung des Trägers des jeweiligen Rahmens der Säschareinheit.

Insbesondere bei Parallelogrammführungen einer Säschareinheit gestaltet sich allerdings eine Einstellung schwieriger und aufwendiger als eine Einstellung einer Säschareinheit, welche mittels nur einer Schwinge gelagert ist.

Es ist eine Aufgabe der vorliegenden Erfindung, eine Tragvorrichtung zur Montage an einen Maschinenrahmen einer landwirtschaftlichen Arbeitsmaschine bereitzustellen, welche zumindest eine Werkzeugeinrichtung zur Bearbeitung eines Bodens und/oder zur Einbringung eines landwirtschaftlichen Guts in einen Boden umfasst, wobei eine Verstellung der zumindest einen Werkzeugeinrichtung optimiert und vor allem automatisiert ist, um die zumindest eine Werkzeugeinrichtung definiert zu verstellen. Ferner ist es eine Aufgabe der vorliegenden Erfindung, eine landwirtschaftliche Arbeitsmaschine mit zumindest einer solchen Tragvorrichtung bereitzustellen. Darüber hinaus ist es eine weitere Aufgabe der vorliegenden Erfindung, ein Verfahren zur Verstellung zumindest einer Werkzeugeinrichtung einer solchen landwirtschaftlichen Arbeitsmaschine bereitzustellen.

Die Aufgabe wird durch die Merkmale der Ansprüche 1, 13 und 15 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt eine Tragvorrichtung zur Montage an einen Maschinenrahmen einer landwirtschaftlichen Arbeitsmaschine, • mit einem Vorrichtungsrahmen zur beweglichen, vorzugsweise schwenkbaren und/oder gelenkigen, Koppelung an den Maschinenrahmen; • mit zumindest einer Werkzeugeinrichtung zur Bearbeitung eines Bodens und/oder zur Einbringung eines landwirtschaftlichen Guts in einen Boden; • mit zumindest einer Verstelleinrichtung, welche zur Koppelung der zumindest einen Werkzeugeinrichtung an den Vorrichtungsrahmen und Einstellung einer Lage der zumindest einen Werkzeugeinrichtung eine Koppeleinheit und eine Stelleinheit umfasst; wobei die Koppeleinheit an dem Vorrichtungsrahmen gelagert und zur Betätigung durch zumindest ein Aktuatorelement konfiguriert ist, wobei sich das zumindest eine Aktuatorelement an dem Vorrichtungsrahmen abstützt.

Durch die vorliegende Erfindung kann eine Tragvorrichtung und im Weiteren eine landwirtschaftliche Arbeitsmaschine mit einer solchen Tragvorrichtung bereitgestellt werden, bei welcher vor allem eine Einstellung der Arbeitstiefe der zumindest einen Werkzeugeinrichtung wesentlich vereinfacht ist. Darüber hinaus kann eine Anzahl der für eine Verstellung der zumindest einen Werkzeugeinrichtung erforderlichen Schritte oder Maßnahmen wesentlich verringert werden. Es ist mit der vorliegenden Erfindung möglich, die zumindest eine Werkzeugeinrichtung mittels der zumindest einen Verstelleinrichtung automatisiert einzustellen. Manuell durchzuführende Einstellarbeiten an der zumindest einen Werkzeugeinrichtung entfallen oder können zumindest deutlich reduziert werden. Dies ist beispielsweise dann vorteilhaft, wenn die zumindest eine Werkzeugeinrichtung zwei Werkzeugeinheiten umfasst, wovon die eine Werkzeugeinheit eine Schneidscheibeneinheit, das heißt eine Schareinheit ist, und die andere Werkzeugeinheit eine Rolleneinheit zum Andrücken des Bodens, das heißt eine Andruckrolle ist.

Die Einstellung der Lage umfasst vorzugsweise eine Einstellung der Lage relativ zu zumindest einem von folgenden: den Vorrichtungsrahmen; den Boden; den Maschinenrahmen, wenn die Tragvorrichtung an dem Maschinenrahmen beweglich gekoppelt ist. Die Lage kann eine Position und/oder eine Ausrichtung umfassen.

Mit der vorliegenden Erfindung kann eine definierte Arbeitstiefe der zumindest einen Werkzeugeinrichtung auf vergleichsweise einfach Art und Weise realisiert werden. Die Tragvorrichtung kann autark vormontiert ausgebildet sein. Die Tragvorrichtung kann hinsichtlich der zumindest einen Werkzeugeinrichtung durch eine Modularität gekennzeichnet sein.

Gemäß einem weiteren Aspekt der vorliegenden Erfindung kann vorgesehen sein, dass die Koppeleinheit und die Stelleinheit miteinander beweglich und/oder zueinander einstellbar gekoppelt sind, und konfiguriert sind, eine Betätigung der Koppeleinheit umzuwandeln, vorzugsweise nach einem definierten Verhältnis, und/oder in Abhängigkeit einer Betätigung der Koppeleinheit die zumindest eine Werkzeugeinrichtung definiert zu verstellen.

Die zumindest eine Verstelleinrichtung kann als ein verstellbarer Koppelgetriebemechanismus, vorzugsweise ein verstellbarer Vielgelenkmechanismus, ausgebildet sein.

Es ist möglich, dass die Tragvorrichtung eine Rückverfestigungseinrichtung zum Andrücken des Bodens umfasst, wobei die Rückverfestigungseinrichtung, vorzugsweise von der zumindest einen Verstelleinrichtung entkoppelt, an dem Vorrichtungsrahmen angeordnet ist. Mit anderen Worten kann die Rückverfestigungseinrichtung von der zumindest einen Verstelleinrichtung unabhängig an dem Vorrichtungsrahmen angeordnet sein.

Dadurch kann beispielsweise sichergestellt werden, dass die zumindest eine Werkzeugeinrichtung von der Rückverfestigungseinrichtung unabhängig eingestellt wird und/oder die Rückverfestigungseinrichtung im Zuge einer Verstellung der zumindest einen Werkzeugeinrichtung nicht verstellt wird.

Gemäß einem weiteren Gesichtspunkt der vorliegenden Erfindung kann vorgesehen sein, dass, vorzugsweise in einer Draufsicht der Tragvorrichtung, die zumindest eine Verstelleinrichtung zwischen der/einer Rückverfestigungseinrichtung zum Andrücken des Bodens und der zumindest einen Werkzeugeinrichtung angeordnet ist, und dass die Rückverfestigungseinrichtung zu dem Vorrichtungsrahmen im Wesentlichen lagestabil angeordnet ist.

Die Rückverfestigungseinrichtung kann mittels Lagerelementen drehbar an dem Vorrichtungsrahmen gelagert sein. Die Lagerelemente können ein Bestandteil des Vorrichtungsrahmens sein. Die Lagerelemente können an definierten Positionen des Vorrichtungsrahmens angeordnet sein.

Es ist möglich, dass, vorzugsweise in einer Seitenansicht der Tragvorrichtung und/oder in einem Betriebszustand der Tragvorrichtung, das zumindest eine Aktuatorelement derart gelagert ist, dass eine Betätigungsrichtung des zumindest einen Aktuatorelements zu einer Ebene des Bodens und/oder zu dem Boden einen Winkel ausbildet, welcher vorzugsweise größer als circa 45 Grad, besonders bevorzugt größer als circa 80 Grad, ist.

Die Betätigungsrichtung kann eine idealisierte und/oder resultierende Betätigungsrichtung sein. Die Ebene des Bodens kann eine idealisierte und/oder resultierende Ebene des Bodens sein.

Gemäß einem weiteren Aspekt der vorliegenden Erfindung kann vorgesehen sein, dass die Koppeleinheit zumindest ein Unterlenkerelement zur Abstützung der zumindest einen Werkzeugeinrichtung umfasst; wobei das zumindest eine Unterlenkerelement, vorzugsweise an einem freien Ende des zumindest einen Unterlenkerelements, an dem Vorrichtungsrahmen schwenkbar gelagert ist, und/oder wobei das zumindest eine Aktuatorelement mit dem zumindest einen Unterlenkerelement gelenkig gekoppelt ist, vorzugsweise an einem freien Ende des zumindest einen Aktuatorelements und/oder zwischen freien Enden des zumindest einen Unterlenkerelements.

Das zumindest eine Unterlenkerelement kann zur Übertragung eines wesentlichen Anteils der Gewichtskraft der zumindest einen Werkzeugeinrichtung konfiguriert sein. Mit anderen Worten kann das zumindest eine Unterlenkerelement als schwenkbar gelagerter Stützarm ausgebildet sein.

Es ist möglich, dass die zumindest eine Werkzeugeinrichtung ein Schwenkelement umfasst, welches über ein Querträgerelement der Koppeleinheit mit dem zumindest einen Unterlenkerelement gekoppelt ist, wobei vorzugsweise das Querträgerelement an dem zumindest einen Unterlenkerelement einstellbar gelagert, ganz besonders drehbar gelagert, und/oder abgestützt ist.

Das Schwenkelement kann mit anderen Worten eine Schwinge der zumindest einen Werkzeugeinrichtung bilden und/oder Bestandteil einer Parallelogrammführung sein. Das Querträgerelement kann hinsichtlich der zumindest einen Werkzeugeinrichtung bei entsprechender Konfiguration der zumindest einen Werkzeugeinrichtung eine so genannte Scharachse bilden. Das Querträgerelement kann an dem Unterlenkerelement hinsichtlich einer definierten Verdrehung einstellbar gelagert und/oder abgestützt sein. Dadurch kann vorzugsweise ein Werkzeugdruck der zumindest einen Werkzeugeinrichtung auf den Boden, beispielsweise in Form eines Schardrucks, in einem entsprechenden Zustand eingestellt werden. Die Einstellung kann beispielsweise mittels eines Handkurbeltriebs und weiteren Elementen realisiert werden, welche unter anderem mit dem Querträgerelement entsprechend gekoppelt ist.

Gemäß einem weiteren Gesichtspunkt der vorliegenden Erfindung kann vorgesehen sein, dass die Stelleinheit zumindest ein Oberlenkerelement umfasst, welches an einem Stützelement der Koppeleinheit, welches dem zumindest einen Oberlenkerelement zugeordnet ist, schwenkbar gelagert ist, wobei das zumindest eine Oberlenkerelement über ein Stellträgerelement der Stelleinheit mit der zumindest einen Werkzeugeinrichtung gelenkig gekoppelt ist.

Mit anderen Worten kann das zumindest eine Oberlenkerelement als Schwenkarm ausgebildet sein. Das zumindest eine Oberlenkerelement kann einteilig oder mehrteilig ausgebildet sein.

Es ist möglich, dass das zumindest eine Oberlenkerelement über ein einstellbares Koppelelement mit dem/einem Querträgerelement der Koppeleinheit gelenkig gekoppelt ist, wobei vorzugsweise das Querträgerelement an dem zumindest einen Unterlenkerelement einstellbar gelagert, vorzugsweise drehbar gelagert, und/oder abgestützt ist.

Dadurch kann eine Einstellbarkeit der zumindest einen Verstelleinrichtung realisiert werden, um eine Betätigung der Koppeleinheit durch das zumindest eine Aktuatorelement in einem definierten Verhältnis umzuwandeln und damit die zumindest eine Werkzeugeinrichtung hinsichtlich einer definierten Lage einzustellen. Das Querträgerelement kann wie hierin offenbart ausgebildet sein.

Es ist zusätzlich oder alternativ möglich, dass das zumindest eine Stützelement mit dem Vorrichtungsrahmen starr verbunden ist. Das Stützelement kann an einem Rahmenelement des Vorrichtungsrahmens befestigt sein, beispielsweise mittels einer Schweißverbindung oder mittels einer Schraubverbindung.

Gemäß einem weiteren Gesichtspunkt der vorliegenden Erfindung kann vorgesehen sein, dass die zumindest eine Werkzeugeinrichtung als eine separate, vorzugsweise autark vormontierbare, Werkzeugeinrichtung konfiguriert ist, welche zur Bildung individuell konfigurierbarer Werkzeugeinheiten einen Werkzeugträger umfasst, wobei vorzugsweise der Werkzeugträger über ein Stellelement mit der Stelleinheit gelenkig gekoppelt ist, und/oder wobei vorzugsweise der Werkzeugträger über ein Schwenkelement mit der Koppeleinheit gekoppelt ist.

Es ist möglich, dass die zumindest eine Werkzeugeinrichtung eine erste Werkzeugeinheit und eine zweite Werkzeugeinheit umfasst, wobei die erste Werkzeugeinheit und die zweite Werkzeugeinheit an einem Werkzeugträger der zumindest einen Werkzeugeinrichtung voneinander beabstandet und/oder zueinander einstellbar angeordnet sind, wobei der Werkzeugträger konfiguriert ist, dass bei einer Betätigung der Koppeleinheit eine definierte Werkzeuglage der zweiten Werkzeugeinheit zu dem Boden eingestellt wird und/oder ein definierter Werkzeugdruck der ersten Werkzeugeinheit auf den Boden eingestellt wird, und/oder umgekehrt.

Gemäß einem weiteren Aspekt der vorliegenden Erfindung kann vorgesehen sein, dass die zumindest eine Werkzeugeinrichtung zumindest eine Werkzeugeinheit von Folgenden umfasst: • eine Schneidscheibeneinheit, um in dem Boden eine Furche zu bilden und/oder zu öffnen, wobei vorzugsweise die Schneidscheibeneinheit zwei zueinander schräg angeordnete Schneidscheiben umfasst; • eine Kufeneinheit, um in dem Boden eine Furche zu bilden und/oder zu öffnen; • eine Rolleneinheit, um den Boden, vorzugsweise eine Furche, zumindest teilweise anzudrücken und/oder zumindest teilweise zu schließen, und/oder um ein landwirtschaftliches Gut in dem Boden, vorzugsweise im Bereich einer Furche, zu fangen und/oder abzubremsen; • eine Säeinheit mit zumindest einem Leitungselement, um ein landwirtschaftliches Gut in den Boden einzubringen, vorzugsweise in einer Furche abzulegen.

Die vorliegende Erfindung betrifft nach einem zweiten allgemeinen Gesichtspunkt eine (mobile) landwirtschaftliche Arbeitsmaschine, vorzugsweise zur Bearbeitung eines Bodens und/oder zur Einbringung eines landwirtschaftlichen Guts in einen Boden und/oder zum Transport eines landwirtschaftlichen Guts, mit einem Maschinenrahmen, welcher an einer Frontseite eine Zugund/oder Montagevorrichtung aufweist, über welche die Arbeitsmaschine in einem Transportzustand und in einem Betriebszustand in einer Bewegungsrichtung gezogen werden kann, wobei an dem Maschinenrahmen, vorzugsweise an einer Seite des Maschinenrahmens, zumindest eine Tragvorrichtung wie hierin offenbart und zumindest ein Aktuatorelement zur Betätigung einer Koppeleinheit der zumindest einen Tragvorrichtung montiert ist.

Gemäß einem weiteren Gesichtspunkt der vorliegenden Erfindung kann vorgesehen sein, dass das zumindest eine Aktuatorelement als Linearaktuator konfiguriert ist oder einen Linearaktuator umfasst, welcher elektrisch, elektromechanisch, pneumatisch und/oder hydraulisch betätigbar konfiguriert ist, und/oder dass das zumindest eine Aktuatorelement konfiguriert ist, die Betätigung der Koppeleinheit mittels zumindest eines Anschlag-Clips einzustellen.

Der zumindest eine Anschlag-Clip kann als ein steckbarer und/oder lösbarer Clip ausgebildet sein.

Die vorliegende Erfindung betrifft nach einem dritten allgemeinen Gesichtspunkt ein Verfahren zur Verstellung zumindest einer Werkzeugeinrichtung einer landwirtschaftlichen Arbeitsmaschine wie hierin offenbart, wobei die Koppeleinheit durch das zumindest eine Aktuatorelement betätigt wird und die Betätigung der Koppeleinheit durch die Koppeleinheit und durch die Stelleinheit umgewandelt wird und in Abhängigkeit der umgewandelten Betätigung die zumindest eine Werkzeugeinrichtung definiert eingestellt wird.

Zur Vermeidung von Wiederholungen sollen rein auf die Vorrichtung der erfindungsgemäßen Tragvorrichtung und/oder der erfindungsgemäßen landwirtschaftlichen Arbeitsmaschine gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig oder zweckmäßig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: ein erstes Ausführungsbeispiel der Tragvorrichtung gemäß der vorliegenden Erfindung in einer perspektivischen Ansicht, wobei sich die Tragvorrichtung in einem ersten Zustand befindet;
- Fig. 2: die Tragvorrichtung aus Figur 1 in einem ersten Zustand in einer Seitenansicht;
- Fig. 3: die Tragvorrichtung aus Figur 1 in einem zweiten Zustand in einer Seitenansicht;
- Fig. 4: die Tragvorrichtung aus Figur 1 in einem dritten Zustand in einer Seitenansicht;
- Fig. 5: die Tragvorrichtung aus Figur 1 in einer weiteren perspektivischen Ansicht;
- Fig. 6: ein erstes Ausführungsbeispiel der landwirtschaftlichen Arbeitsmaschine gemäß der vorliegenden Erfindung mit zwei Tragvorrichtungen nach einem zweiten Ausführungsbeispiel, wobei sich die Tragvorrichtungen in einem ersten Zustand befinden.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

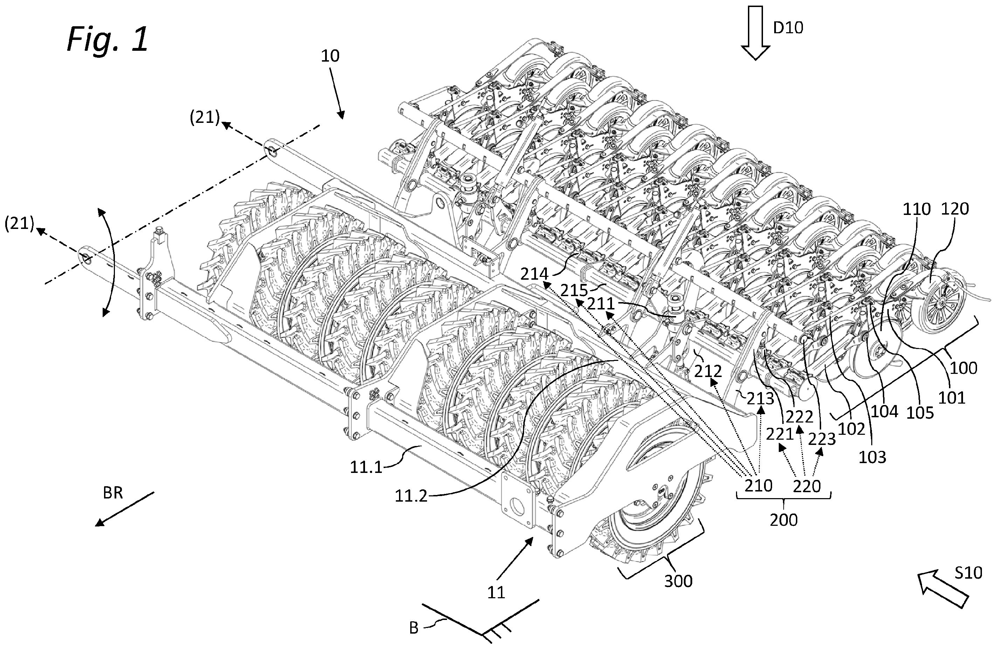

Figur 1 zeigt ein erstes Ausführungsbeispiel der Tragvorrichtung 10 gemäß der vorliegenden Erfindung in einer perspektivischen Ansicht.

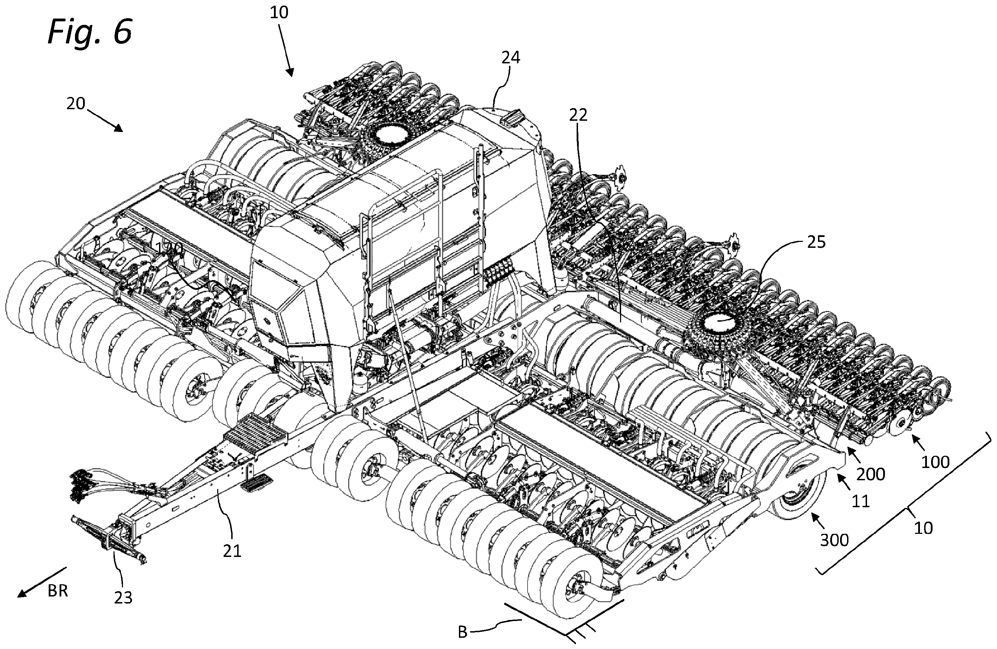

Die Tragvorrichtung 10 ist zur Montage an einen Maschinenrahmen 21 (in Figur 1 ausgeblendet, daher die Bezugszeichen 21 in Klammern gesetzt) einer mobilen landwirtschaftlichen Arbeitsmaschine 20 konfiguriert. Die landwirtschaftliche Arbeitsmaschine 20 dient zur Bearbeitung eines Bodens B einer landwirtschaftlichen Nutzfläche. Ein Ausführungsbeispiel der landwirtschaftlichen Arbeitsmaschine 20 gemäß der vorliegenden Erfindung ist in Figur 6 in einer perspektivischen Darstellung gezeigt. Die Tragvorrichtung 10 ist dort an den Maschinenrahmen 21 montiert. Die landwirtschaftliche Arbeitsmaschine 20 wird im Folgenden auch abgekürzt als "Arbeitsmaschine" bezeichnet und anhand der Darstellung in Figur 6 näher beschrieben.

Die Tragvorrichtung 10 umfasst einen Vorrichtungsrahmen 11 und mehrere Einrichtungen 100, 200, 300. Der Vorrichtungsrahmen 11 bildet für die Einrichtungen 100, 200 und 300 einen tragenden Rahmen (Tragrahmen). Der Vorrichtungsrahmen 11 umfasst im Wesentlichen ein erstes Rahmenelement 11.1 und ein zweites Rahmenelement 11.2. Das erste Rahmenelement 11.1 und das zweite Rahmenelement 11.2 sind beispielsweise jeweils als ein Vierkantrohr mit abgerundeten Kanten ausgebildet, um eine hinreichende Steifigkeit und/oder Stabilität zu realisieren. Das erste Rahmenelement 11.1 und das zweite Rahmenelement 11.2 sind voneinander beabstandet und/oder zueinander gegenüberliegend angeordnet. Die Beabstandung und/oder Anordnung der Rahmenelemente 11.1 und 11.2 wird mittels drei plattenförmigen Tragelementen realisiert, welche aus Gründen der Übersichtlichkeit nicht gekennzeichnet sind.

Der Vorrichtungsrahmen 11 und somit die Tragvorrichtung 10 ist zur beweglichen Koppelung, vorzugsweise zur schwenkbaren Lagerung, an den Maschinenrahmen 21 konfiguriert. Dadurch kann ein Transportzustand und/oder mehrere Betriebszustände der Arbeitsmaschine 20 realisiert werden. Ein Transportzustand ist vorzugsweise ein Zustand der Arbeitsmaschine 20, bei welchem die Arbeitsmaschine 20 bestimmungsgemäß und/oder ordnungsgemäß, vor allem zur Gewährleistung des Transports der Arbeitsmaschine 20 vorzugsweise auf öffentlichen Straßen und/oder Wegen, bewegt werden kann, wobei vor allem gesetzliche Vorgaben hinsichtlich Gewicht und Abmessungen der Arbeitsmaschine 20 eingehalten werden. Ein Betriebszustand ist vorzugsweise ein Zustand der Arbeitsmaschine 20, in welchem die Arbeitsmaschine 20 bestimmungsgemäß und/oder ordnungsgemäß, vor allem zur Gewährleistung der Funktion und Sicherheit, betrieben werden kann.

Die Tragvorrichtung 10 umfasst zumindest eine Werkzeugeinrichtung 100 und vorzugsweise eine Mehrzahl von Werkzeugeinrichtungen 100. Darüber hinaus umfasst die Tragvorrichtung 10 zumindest eine Verstelleinrichtung 200 sowie eine Rückverfestigungseinrichtung 300.

In den Figuren ist aus Gründen der Übersichtlichkeit eine Werkzeugeinrichtung 100 mit Bezugszeichen gekennzeichnet. Nachfolgend wird eine Werkzeugeinrichtung 100, vorzugsweise stellvertretend für die Mehrzahl von Werkzeugeinrichtungen 100, näher beschrieben. Ferner wird nachfolgend die Formulierung "zumindest ein" in Verbindung mit jeweiligen Einrichtungen und/oder Elementen der Einfachheit halber weggelassen.

Die Werkzeugeinrichtung 100 ist als eine separate, vorzugsweise autark (vor)montierbare, Werkzeugeinrichtung 100 konfiguriert. Die Werkzeugeinrichtung 100 kann beispielsweise unabhängig von weiteren Einheiten und Elementen der Tragvorrichtung 10 und/oder der Arbeitsmaschine 20 montiert (zusammengebaut), demontiert (zerlegt), konfiguriert, eingestellt und/oder gewartet werden. Die Werkzeugeinrichtung 100 umfasst einen Werkzeugträger 101. Der Werkzeugträger 101 ist zur Bildung und/oder zur Anordnung individuell konfigurierbarer Werkzeugeinheiten 110, 120 konfiguriert. Der Werkzeugträger 101 ist im Wesentlichen flach und/oder im Wesentlichen plattenförmig ausgebildet.

Die Werkzeugeinrichtung 100 umfasst eine erste Werkzeugeinheit 110 und eine zweite Werkzeugeinheit 120. Die erste Werkzeugeinheit 110 ist bei dem dargestellten Ausführungsbeispiel direkt oder unmittelbar (direkt) an dem Werkzeugträger 101 angeordnet. Die zweite Werkzeugeinheit 120 ist über ein Werkzeugtragelement an dem und/oder mit dem Werkzeugträger 101 verbunden. Das Werkzeugtragelement kann ein Bestandteil des Werkzeugträgers 101 sein. Der Werkzeugträger 101 kann auch einteilig und/oder integral einstückig ausgebildet sein.

Die erste Werkzeugeinheit 110 ist als Schneidscheibeneinheit 110 konfiguriert, um in dem Boden B eine Furche zu bilden und/oder zu öffnen. Die Schneidscheibeneinheit 110 umfasst vorzugsweise zwei zueinander schräg angeordnete Schneidscheiben. Dadurch wird beispielsweise ein im Wesentlichen gleichmäßiger Feldaufgang nach einer Aussaat gewährleistet. Die zweite Werkzeugeinheit 120 ist als Rolleneinheit konfiguriert, um den Boden B, vorzugsweise die von der Schneidscheibeneinheit 110 gebildete und/oder geöffnete Furche, anzudrücken. Mit anderen Worten ist die Rolleneinheit 120 als Andruckrolle konfiguriert. Bei dem dargestellten Ausführungsbeispiel ist die Werkzeugeinrichtung 100 somit eine kombinierte Werkzeugeinrichtung 100 mit einer Doppelscheibenschareinheit 110 und mit einer Andruckrolleneinheit 120.

Die Werkzeugeinrichtung 100 umfasst weitere Werkzeugeinheiten, wie beispielsweise eine Säeinheit, um ein landwirtschaftliches Gut über ein Zuführelement und Abgabeelement und somit über ein Leitungselement der Säeinheit in den Boden B einzubringen, vorzugsweise in der Furche abzulegen. Die Säeinheit und insgesamt die Säeinrichtung 25 ist in Figur 6 bei der Darstellung der Arbeitsmaschine 20 eingeblendet.

Die Tragvorrichtung 10 umfasst ferner eine Rückverfestigungseinrichtung 300, welche zum Andrücken des Bodens B, vorzugsweise in einem Betriebszustand der Arbeitsmaschine 20, konfiguriert ist. Die Rückverfestigungseinrichtung 300 ist bei dem in den Figuren dargestellten Ausführungsbeispiel als Reifen-Packerwalze mit Stollenreifen ausgebildet. Alternativ sind andere Konfigurationen der Rückverfestigungseinrichtung 300 möglich.

Die Rückverfestigungseinrichtung 300 ist an dem Vorrichtungsrahmen 11 angeordnet und von der zumindest einen Verstelleinrichtung 200 entkoppelt und/oder getrennt. Die Rückverfestigungseinrichtung 300 ist an den plattenförmigen Tragelementen des Vorrichtungsrahmens 11, welche zwischen den Rahmenelementen 11.1 und 11.2 angeordnet sind, mittels entsprechender Lagerelemente drehbar gelagert. Die Rückverfestigungseinrichtung 300 ist relativ zu dem Vorrichtungsrahmen 11 im Wesentlichen lagestabil angeordnet. Mit anderen Worten behält die Rückverfestigungseinrichtung 300 ihre Position und/oder Ausrichtung relativ zu dem Vorrichtungsrahmen 11 bei. Eine Lage und somit eine Position und/oder Ausrichtung der Rückverfestigungseinrichtung 300 wird nur und/oder ausschließlich mittels einer Betätigung des Vorrichtungsrahmens 11 eingestellt.

Wie sich aus der Darstellung in Figur 1 ergibt, ist, vorzugsweise in einer Draufsicht D10 der Tragvorrichtung 10, die zumindest eine Verstelleinrichtung 200 zwischen der Rückverfestigungseinrichtung 300 und der Werkzeugeinrichtung 100 angeordnet.

Die Tragvorrichtung 10 umfasst vorzugsweise zwei Verstelleinrichtungen 200, von welchen die Verstelleinrichtung 200 gekennzeichnet ist. Es wird nachfolgend die Ausbildung und Konfiguration der gekennzeichneten Verstelleinrichtung 200 beschrieben, was entsprechend für die weitere Verstelleinrichtung gilt, welche aus Gründen der Übersichtlichkeit nicht gekennzeichnet ist.

Die Verstelleinrichtung 200 umfasst zur Koppelung der Werkzeugeinrichtung 100 an den Vorrichtungsrahmen 11 und Einstellung einer Lage der Werkzeugeinrichtung 100 eine Koppeleinheit 210 und eine Stelleinheit 220. Die Verstelleinrichtung 200 und die Werkzeugeinrichtung 100 bilden einen verstellbaren Koppelgetriebemechanismus, vorzugsweise einen verstellbaren Vielgelenkmechanismus oder einen verstellbaren Parallelogramm-Mechanismus, aus.

Die Lage der Werkzeugeinrichtung 100 umfasst eine Position und/oder eine Ausrichtung der Werkzeugeinrichtung 100, vorzugsweise relativ zu zumindest einem von folgenden: der Maschinenrahmen 21, der Vorrichtungsrahmen 11, der Boden B. Die Einstellung der Lage dient der Realisierung einer definierten Arbeitstiefe der Werkzeugeinrichtung 100 und somit der Werkzeugeinheiten 110 und 120 in dem Boden B.

Die Koppeleinheit 210 ist an dem Vorrichtungsrahmen 11, vorzugsweise an dem Rahmenelement 11.1, gelagert und zur Betätigung durch ein Aktuatorelement 211 konfiguriert. Das Aktuatorelement 211 stützt sich an dem Vorrichtungsrahmen 11 ab. Mit anderen Worten betätigt das Aktuatorelement 211 die Koppeleinheit 210.

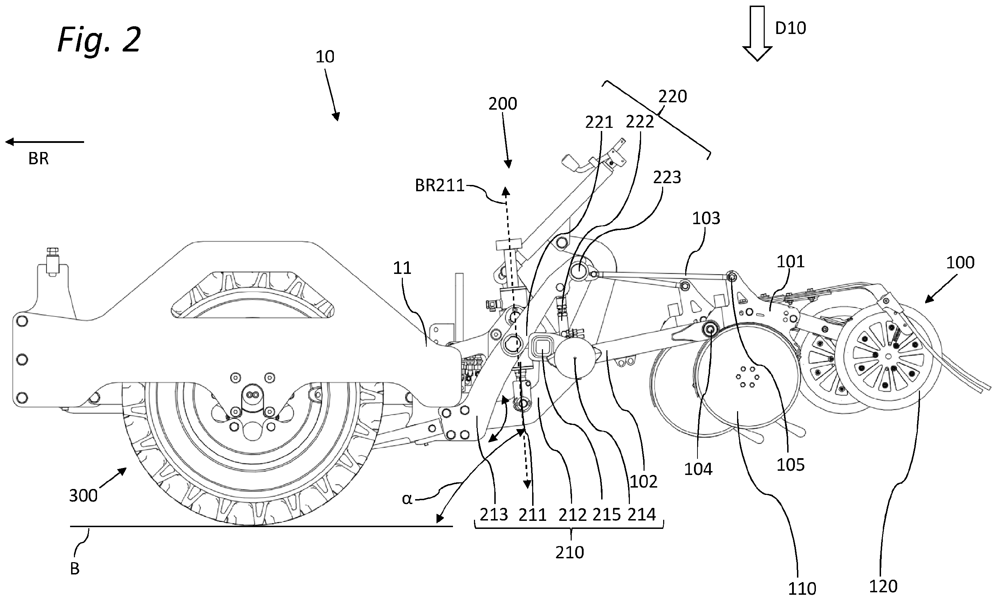

Das Aktuatorelement 211 ist beispielsweise als Linearaktuator konfiguriert oder umfasst einen Linearaktuator. Das Aktuatorelement 211 kann elektrisch, elektromechanisch, pneumatisch und/oder hydraulisch betätigbar konfiguriert sein. Ferner kann das Aktuatorelement 211 konfiguriert sein, die Betätigung mittels zumindest eines Anschlag-Clips (in den Figuren nicht dargestellt) einzustellen. Der Anschlag-Clip kann aus Aluminium ausgebildet sein, um eine Betätigung, das heißt einen Hub des Aktuatorelements 211 zu begrenzen. Das Aktuatorelement 211 ist vorzugsweise als ein doppeltwirkender Hydraulikzylinder ausgebildet und durch eine Betätigungsrichtung BR211 (siehe hierzu die weiteren Figuren 2 bis 4) gekennzeichnet.

Die Koppeleinheit 210 und die Stelleinheit 220 sind miteinander beweglich und/oder zueinander einstellbar gekoppelt, und konfiguriert, eine Betätigung der Koppeleinheit 210, vorzugsweise nach einem definierten Verhältnis, umzuwandeln und/oder in Abhängigkeit einer Betätigung, vorzugsweise umgewandelten Betätigung, der Koppeleinheit 210 die Werkzeugeinrichtung 100 definiert zu verstellen und somit eine Lage der Werkzeugeinrichtung 100 einzustellen.

Nachfolgend wird die Koppeleinheit 210 und die Stelleinheit 220 näher beschrieben. Hierzu wird ergänzend auf die Darstellungen in den Figuren 2 bis 4 verwiesen, welche unterschiedliche Zustände und somit Lagen der Werkzeugeinrichtung 100 im Zuge einer jeweiligen Betätigung der Verstelleinrichtung 200 und somit der Koppeleinheit 210 durch das Aktuatorelement 211 zeigen.

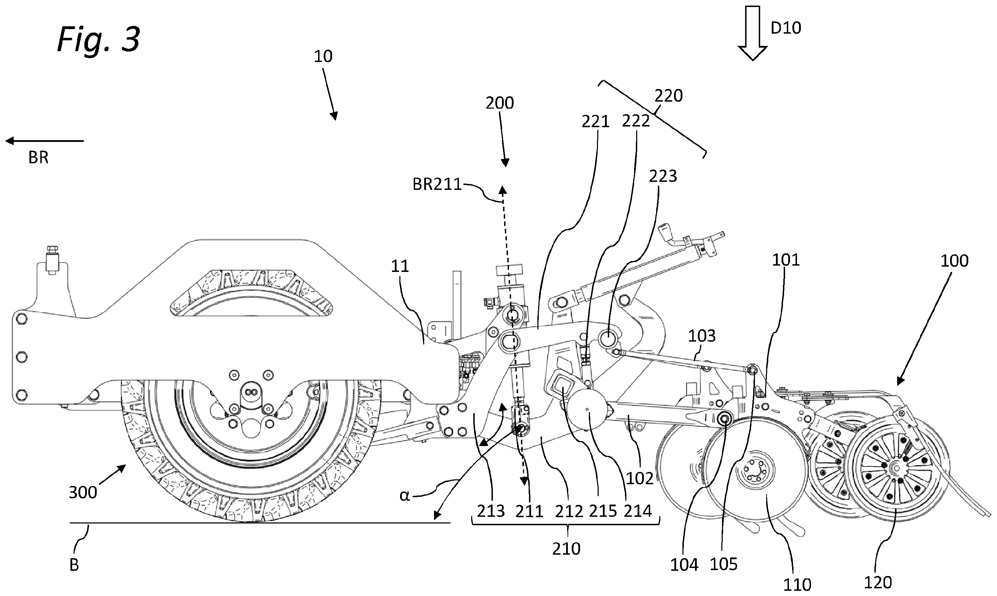

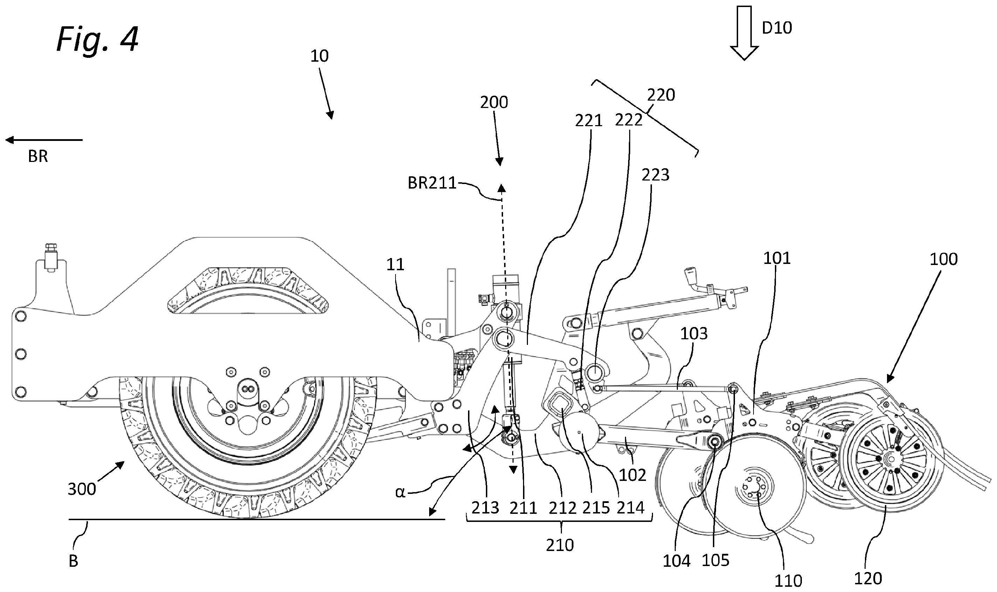

Figur 2 zeigt die Tragvorrichtung 10 aus Figur 1 in einem ersten Zustand in einer Seitenansicht S10, Figur 3 zeigt die Tragvorrichtung 10 aus Figur 1 in einem zweiten Zustand in der Seitenansicht S10 und Figur 4 zeigt die Tragvorrichtung 10 aus Figur 1 in einem dritten Zustand in der Seitenansicht S10. Der zweite Zustand und der dritte Zustand bildet jeweils einen Betriebszustand der Tragvorrichtung 10 und somit der Arbeitsmaschine 20 zur jeweiligen Bearbeitung des Bodens B durch die Werkzeugeinrichtung 100.

Wie sich aus den Darstellungen in den Figuren 2 bis 4 ergibt, ist, vorzugsweise in der Seitenansicht S10 der Tragvorrichtung 10 und/oder in einem jeweiligen Betriebszustand der Tragvorrichtung 10, das Aktuatorelement 211 derart angeordnet und/oder gelagert, dass die Betätigungsrichtung BR211 des Aktuatorelements 211 zu einer idealisierten und/oder resultierenden Ebene des Bodens B und/oder zu dem Boden B einen Winkel α ausbildet, welcher größer als circa 45 Grad, vorzugsweise größer als circa 80 Grad, ist. Mit anderen Worten stellt das Aktuatorelement 211 in einem Betriebszustand der Tragvorrichtung 10 ein stehendes Aktuatorelement 211 und kein liegendes Aktuatorelement 211 dar.

Die Koppeleinheit 210 umfasst ein Unterlenkerelement 212 zur Abstützung der Werkzeugeinrichtung 100. Das Unterlenkerelement 212 ist mit einem freien Ende an dem Vorrichtungsrahmen 11 schwenkbar gelagert. Das Aktuatorelement 211 ist an einem freien Ende des Aktuatorelements 211 mit dem Unterlenkerelement 212 gelenkig gekoppelt, um infolge einer Betätigung des Aktuatorelements 211 eine Schwenkbewegung des Unterlenkerelement 212 auszubilden.

Die Koppeleinheit 210 umfasst ein Querträgerelement 214. Das Querträgerelement 214 erstreckt sich im Wesentlichen parallel entlang einer Längserstreckung zumindest eines Rahmenelements 11.1, 11.2 des Vorrichtungsrahmens 11. Das Querträgerelement 214 ist beispielsweise als ein Vierkantrohr oder als eine Vierkantstange ausgebildet. Das Querträgerelement 214 bildet hinsichtlich der Werkzeugeinrichtung 100 eine so genannte Scharachse. Das Querträgerelement 214 ist an einer definierten Stelle mit dem Unterlenkerelement 212 verbunden, das heißt am Unterlenkerelement 212 einstellbar gelagert, vorzugsweise drehbar gelagert. Das Querträgerelement 214 dient unter anderem zur Koppelung des Unterlenkerelements 212 mit der Werkzeugeinrichtung 100. Mittels eines Kurbeltriebs und weiterer entsprechend gekoppelter Elemente (in den Figuren aus Gründen der Übersichtlichkeit nicht gekennzeichnet) kann eine definierte Verdrehung des Querträgerelements 214 eingestellt werden, womit wiederum eine Einstellung der Lage der Werkzeugeinrichtung 100 und somit eine Einstellung eines Werkzeugdrucks der Werkzeugeinrichtung 100 auf den Boden B einhergeht.

Die Werkzeugeinrichtung 100 umfasst das Schwenkelement 102, welches an dem Querträgerelement 214 gelagert ist, womit eine Koppelung zwischen dem Unterlenkerelement 212 und der Werkzeugeinrichtung 100 ausgebildet wird.

Eine Bewegung des Unterlenkerelements 212 infolge einer Betätigung des Aktuatorelements 211 resultiert durch die Koppelung in einer entsprechend umgewandelten Bewegung des Schwenkelements 102. Das Unterlenkerelement 212 dient zusammen mit dem Querträgerelement 214 zur Einstellung einer ersten Lage, vorzugsweise einer Position, der Werkzeugeinrichtung 100 relativ zu dem Boden B. Das Schwenkelement 102 ist mit dem Werkzeugträger 101 an der Gelenkstelle 104 gelenkig gekoppelt, womit eine Schwenkbewegung der Werkzeugeinheiten 110 und 120 relativ zu dem Schwenkelement 102 ermöglicht wird.

Die Stelleinheit 220 umfasst ein Oberlenkerelement 221. Das Oberlenkerelement 221 ist an einem Stützelement 213 der Koppeleinheit 210, welches dem Oberlenkerelement 221 zugeordnet ist, schwenkbar gelagert. Das Stützelement 213 ist mit dem Vorrichtungsrahmen 11 starr verbunden.

Das Oberlenkerelement 221 ist wiederum über ein Stellträgerelement 223 der Stelleinheit 220 mit der Werkzeugeinrichtung 100 gelenkig gekoppelt. Die Koppelung wird mittels des Stellelements 103 der Werkzeugeinrichtung 100 realisiert. Das Stellelement 103 ist in Form einer Stange von konstanter (unveränderlicher) Länge ausgebildet. Das Stellelement 103 ist mit dem Werkzeugträger 101 an der Gelenkstelle 105 gelenkig gekoppelt.

Die Gelenkstellen 104 und 105 sind Gelenkstellen an der Werkzeugeinrichtung 100, welche einen konstanten Abstand zueinander aufweisen.

Durch die vorliegende Erfindung ist es beispielsweise nicht notwendig, das Stellelement 103 einstellbar auszubilden, um eine definierte Lage der Werkzeugeinrichtung 100 und/oder einen definierten Werkzeugdruck der Werkzeugeinrichtung 100 auf den Boden B in einem Betriebszustand zu realisieren.

Zur Realisierung einer Einstellbarkeit der Verstelleinrichtung 200 ist das Oberlenkerelement 221 über ein einstellbares Koppelelement 222 mit dem Querträgerelement 214 der Koppeleinheit 210 gelenkig gekoppelt. Das einstellbare Koppelelement 222 kann zur Einstellung einer Länge beispielsweise eine betätigbare Gewindestange umfassen.

An dem Unterlenkerelement 212 ist ferner ein Anschlagelement 215 der Koppeleinheit 210 angeordnet. Das Anschlagelement 215 kann beispielsweise als ein Vierkantrohr ausgebildet sein und sich im Wesentlichen parallel entlang einer Längserstreckung zumindest eines Rahmenelements 11.1, 11.2 des Vorrichtungsrahmens 11 erstrecken. Das Anschlagelement 215 ist mit dem Unterlenkerelement 212 starr verbunden und dient vorzugsweise zur Begrenzung eines Bewegungsvorgangs der Verstelleinrichtung 200 und somit der Werkzeugeinrichtung 100.

Die Figuren 2 bis 4 zeigen einen Einstellvorgang der Lage der Werkzeugeinrichtung 100 infolge einer Betätigung des Aktuatorelements 211, womit eine Verstellung der Verstelleinrichtung 200 einhergeht. Die Tragvorrichtung 10 befindet sich in einem in Richtung des Bodens B geschwenkten Zustand, wobei die Lage der Rückverfestigungseinrichtung 300 aufgrund ihrer Anordnung an dem Vorrichtungsrahmen 11 und ihrer Entkoppelung zu der Verstelleinrichtung 200 im Wesentlichen unverändert ist.

Gut erkennbar ist die schwenkbare Lagerung des Unterlenkerelements 212 an dem Vorrichtungsrahmen 11 und die Änderung der Lage des Unterlenkerelements 212 infolge der Betätigung durch das Aktuatorelement 211. Ferner erkennt man an den Darstellungen in den Figuren 2 bis 4, dass das Anschlagelement 215 und das Querträgerelement 214 durch die Bewegung des Unterlenkerelements 212 mitbewegt werden und über die weiteren Elemente 102, 103, 221, 222, 223 eine Einstellung der Lage der Werkzeugeinrichtung 100 erfolgt.

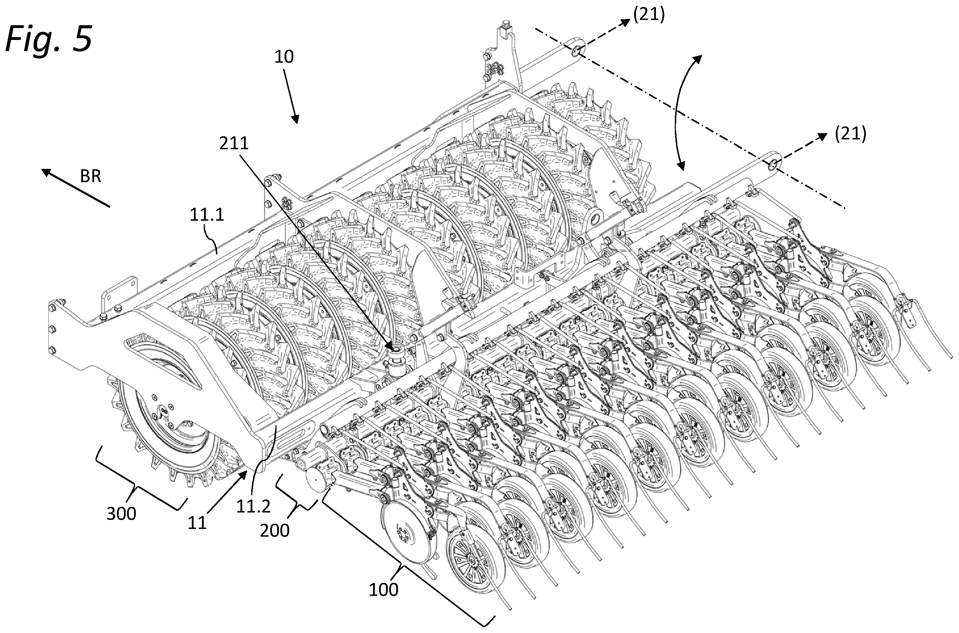

Figur 5 zeigt zur näheren Veranschaulichung die Tragvorrichtung 10 aus Figur 1 in einer weiteren perspektivischen Ansicht.

Figur 6 zeigt ein erstes Ausführungsbeispiel der Arbeitsmaschine 20 gemäß der vorliegenden Erfindung mit zwei montierten Tragvorrichtungen 10 nach einem zweiten Ausführungsbeispiel, wobei sich die Tragvorrichtungen 10 jeweils in einem ersten Zustand befinden. Die Tragvorrichtungen 10 sind an dem Maschinenrahmen 21 an zueinander gegenüberliegenden Seiten an dem Maschinenrahmen 21 beweglich gekoppelt, vorzugsweise schwenkbar gelagert. Der Maschinenrahmen 21 der Arbeitsmaschine 20, kann abschnittsweise in Form eines Leiterrahmens als Haupttragrahmen der Arbeitsmaschine 20 ausgebildet sein.

Die Arbeitsmaschine 20 ist vorzugsweise eine mobile und/oder anhängbare Arbeitsmaschine 20 zur Bearbeitung eines Bodens B und/oder zur Einbringung eines landwirtschaftlichen Guts in einen Boden B. Der Maschinenrahmen 21 weist an einer Frontseite eine Zug- und/oder Montagevorrichtung 23 auf, über welche die Arbeitsmaschine 20 in einem Transportzustand und in einem Betriebszustand in einer Bewegungsrichtung BR bewegt, das heißt gezogen werden kann. Mit anderen Worten ist die Arbeitsmaschine 20 vorzugsweise in einem Transportzustand und in einem Betriebszustand eine gezogene landwirtschaftliche Arbeitsmaschine 20. Als Zugmaschine für die Arbeitsmaschine 20 dient beispielsweise ein Ackerschlepper in Form eines Radtraktors oder eines Raupentraktors (in Figur 6 ausgeblendet).

Die Tragvorrichtungen 10 sind an dem Maschinenrahmen 21 beweglich gekoppelt, vorzugsweise schwenkbar gelagert, und darüber hinaus mittels einem Aktuatorelement 22 relativ zu dem Maschinenrahmen 21 und im Weiteren relativ zu dem Boden B betätigbar gelagert, um eine Lage, das heißt eine Position und/oder eine Ausrichtung der jeweiligen Tragvorrichtung 10 zu dem Boden B und/oder zu dem Maschinenrahmen 21 verändern.

Die Arbeitsmaschine 20 umfasst eine Behältervorrichtung 24 zur Beherbergung des landwirtschaftlichen Guts in Form von Düngemittel und/oder Saatgut. Wie sich aus der Darstellung in Figur 6 ergibt, umfasst die Arbeitsmaschine 20 ferner eine Säeinrichtung 25 zur Aussaat des landwirtschaftlichen Guts in den Boden B und/oder zur Ausbringung von Düngemittel über die Werkzeugeinrichtung 100. Weitere Einheiten und Elemente der Säeinrichtung 25 sind aus Gründen der Übersichtlichkeit nicht näher gekennzeichnet.

Durch die erfindungsgemäße Tragvorrichtung 10 kann ein optimierter Betrieb der Arbeitsmaschine 20 gewährleistet werden. Eine aufwendige Einstellung der Werkzeugeinrichtung 100 in Bezug auf eine definierte Arbeitstiefe und/oder in Bezug auf einen definierten Werkzeugdruck kann vermieden werden.

Es versteht sich, dass ein Einstellen der Lage der Werkzeugeinrichtung 100 zu dem Boden B und/oder zu dem Maschinenrahmen 21, und/oder ein Einstellen des Werkzeugdrucks der Werkzeugeinrichtung 100 auf den Boden B mittels zumindest einer Sensoreinheit hinreichend erfasst werden kann.

Die erfasste Lage und/oder der erfasste Werkzeugdruck kann durch die zumindest eine Sensoreinheit an eine Kontrolleinrichtung zur Regelung und/oder Steuerung der Aktuatorelemente 22, 211 übertragen werden, um die Aktuatorelemente 22, 211 entsprechend zu steuern und/oder zu regeln. Die zumindest eine Sensoreinheit sowie die Kontrolleinrichtung sind in den Figuren nicht dargestellt.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 10: Tragvorrichtung
- 11: Vorrichtungsrahmen
- 11.1: Rahmenelement
- 11.2: Rahmenelement
- 20: Arbeitsmaschine
- 21: Maschinenrahmen
- 22: Aktuatorelement
- 23: Zug- und/oder Montagevorrichtung
- 24: Behältervorrichtung
- 25: Säeinrichtung
- 100: Werkzeugeinrichtung
- 101: Werkzeugträger
- 102: Schwenkelement
- 103: Stellelement
- 104: Gelenkstelle
- 105: Gelenkstelle
- 110: Werkzeugeinheit
- 120: Werkzeugeinheit
- 200: Verstelleinrichtung
- 210: Koppeleinheit
- 211: Aktuatorelement
- 212: Unterlenkerelement
- 213: Stützelement
- 214: Querträgerelement
- 215: Anschlagelement
- 220: Stelleinheit
- 221: Oberlenkerelement
- 222: Koppelelement
- 223: Stellträgerelement
- 300: Rückverfestigungseinrichtung

- B: Boden
- BR: Bewegungsrichtung
- BR211: Betätigungsrichtung
- D10: Draufsicht
- S10: Seitenansicht
- α: Winkel

## Patentansprüche

1. Tragvorrichtung (10) zur Montage an einen Maschinenrahmen (21) einer landwirtschaftlichen Arbeitsmaschine (20),
• mit einem Vorrichtungsrahmen (11) zur beweglichen Koppelung an den Maschinenrahmen (21);
• mit zumindest einer Werkzeugeinrichtung (100) zur Bearbeitung eines Bodens (B) und/oder zur Einbringung eines landwirtschaftlichen Guts in einen Boden (B);
• mit zumindest einer Verstelleinrichtung (200), welche zur Koppelung der zumindest einen Werkzeugeinrichtung (100) an den Vorrichtungsrahmen (11) und Einstellung einer Lage der zumindest einen Werkzeugeinrichtung (100) eine Koppeleinheit (210) und eine Stelleinheit (200) umfasst;
wobei die Koppeleinheit (210) an dem Vorrichtungsrahmen (11) gelagert und zur Betätigung durch zumindest ein Aktuatorelement (211) konfiguriert ist,
wobei sich das zumindest eine Aktuatorelement (211) an dem Vorrichtungsrahmen (11) abstützt.

2. Tragvorrichtung (10) nach Anspruch 1,
wobei die Koppeleinheit (210) und die Stelleinheit (220) miteinander beweglich und/oder zueinander einstellbar gekoppelt sind, und konfiguriert sind, eine Betätigung der Koppeleinheit (210) umzuwandeln und/oder in Abhängigkeit einer Betätigung der Koppeleinheit (210) die zumindest eine Werkzeugeinrichtung (100) definiert zu verstellen.

3. Tragvorrichtung (10) nach Anspruch 1 oder 2,
mit einer Rückverfestigungseinrichtung (300) zum Andrücken des Bodens (B),
wobei die Rückverfestigungseinrichtung (300), vorzugsweise von der zumindest einen Verstelleinrichtung (200) entkoppelt, an dem Vorrichtungsrahmen (11) angeordnet ist.

4. Tragvorrichtung (10) nach einem der vorhergehenden Ansprüche,
wobei, vorzugsweise in einer Draufsicht (D10) der Tragvorrichtung (10), die zumindest eine Verstelleinrichtung (200) zwischen einer Rückverfestigungseinrichtung (300) zum Andrücken des Bodens (B) und der zumindest einen Werkzeugeinrichtung (100) angeordnet ist, und
wobei die Rückverfestigungseinrichtung (300) zu dem Vorrichtungsrahmen (11) lagestabil angeordnet ist.

5. Tragvorrichtung (10) nach einem der vorhergehenden Ansprüche,
wobei, vorzugsweise in einer Seitenansicht (S10) der Tragvorrichtung (10) und/oder in einem Betriebszustand der Tragvorrichtung (10), das zumindest eine Aktuatorelement (211) derart gelagert ist, dass eine Betätigungsrichtung (BR211) des zumindest einen Aktuatorelements (211) zu einer Ebene des Bodens (B) einen Winkel (α) ausbildet, welcher vorzugsweise größer als 45 Grad, besonders bevorzugt größer als 80 Grad, ist.

6. Tragvorrichtung (10) nach einem der vorhergehenden Ansprüche,
wobei die Koppeleinheit (210) zumindest ein Unterlenkerelement (212) zur Abstützung der zumindest einen Werkzeugeinrichtung (100) umfasst;
wobei das zumindest eine Unterlenkerelement (212), vorzugsweise an einem freien Ende des zumindest einen Unterlenkerelements (212), an dem Vorrichtungsrahmen (11) schwenkbar gelagert ist, und/oder
wobei das zumindest eine Aktuatorelement (211) mit dem zumindest einen Unterlenkerelement (212) gelenkig gekoppelt ist, vorzugsweise an einem freien Ende des zumindest einen Aktuatorelements (211).

7. Tragvorrichtung (10) nach Anspruch 6,
wobei die zumindest eine Werkzeugeinrichtung (100) ein Schwenkelement (102) umfasst, welches über ein Querträgerelement (214) der Koppeleinheit (210) mit dem zumindest einen Unterlenkerelement (212) gekoppelt ist,
wobei vorzugsweise das Querträgerelement (214) an dem zumindest einen Unterlenkerelement (212) einstellbar gelagert ist.

8. Tragvorrichtung (10) nach einem der vorhergehenden Ansprüche,
wobei die Stelleinheit (220) zumindest ein Oberlenkerelement (221) umfasst, welches an einem Stützelement (213) der Koppeleinheit (210), welches dem zumindest einen Oberlenkerelement (221) zugeordnet ist, schwenkbar gelagert ist,
wobei das zumindest eine Oberlenkerelement (221) über ein Stellträgerelement (223) der Stelleinheit (220) mit der zumindest einen Werkzeugeinrichtung (100) gelenkig gekoppelt ist.

9. Tragvorrichtung (10) nach Anspruch 8,
wobei das zumindest eine Oberlenkerelement (221) über ein einstellbares Koppelelement (222) mit einem Querträgerelement (214) der Koppeleinheit (210) gelenkig gekoppelt ist, wobei vorzugsweise das Querträgerelement (214) an dem zumindest einen Unterlenkerelement (212) einstellbar gelagert ist; und/oder
wobei das zumindest eine Stützelement (213) mit dem Vorrichtungsrahmen (11) starr verbunden ist.

10. Tragvorrichtung (10) nach einem der vorhergehenden Ansprüche,
wobei die zumindest eine Werkzeugeinrichtung (100) als eine separate, vorzugsweise autark vormontierbare, Werkzeugeinrichtung (100) konfiguriert ist, welche zur Bildung individuell konfigurierbarer Werkzeugeinheiten (110, 120) einen Werkzeugträger (101) umfasst,
wobei vorzugsweise der Werkzeugträger (101) über ein Stellelement (103) mit der Stelleinheit (220) gelenkig gekoppelt ist, und/oder
wobei vorzugsweise der Werkzeugträger (101) über ein Schwenkelement (102) mit der Koppeleinheit (210) gekoppelt ist.

11. Tragvorrichtung (10) nach einem der vorhergehenden Ansprüche,
wobei die zumindest eine Werkzeugeinrichtung (100) eine erste Werkzeugeinheit (110) und eine zweite Werkzeugeinheit (120) umfasst, wobei die erste Werkzeugeinheit (110) und die zweite Werkzeugeinheit (120) an einem Werkzeugträger (101) der zumindest einen Werkzeugeinrichtung (100) voneinander beabstandet und/oder zueinander einstellbar angeordnet sind,
wobei der Werkzeugträger (101) konfiguriert ist, dass bei einer Betätigung der Koppeleinheit (210) eine definierte Werkzeuglage der zweiten Werkzeugeinheit (120) zu dem Boden (B) eingestellt wird und/oder ein definierter Werkzeugdruck der ersten Werkzeugeinheit (110) auf den Boden (B) eingestellt wird, und/oder umgekehrt.

12. Tragvorrichtung (10) nach einem der vorhergehenden Ansprüche,
wobei die zumindest eine Werkzeugeinrichtung (100) zumindest eine Werkzeugeinheit (110, 120) von Folgenden umfasst:
• eine Schneidscheibeneinheit (110), um in dem Boden (B) eine Furche zu bilden und/oder zu öffnen, wobei vorzugsweise die Schneidscheibeneinheit (110) zwei zueinander schräg angeordnete Schneidscheiben umfasst;
• eine Kufeneinheit, um in dem Boden (B) eine Furche zu bilden und/oder zu öffnen;
• eine Rolleneinheit (120), um den Boden (B), vorzugsweise eine Furche, zumindest teilweise anzudrücken und/oder zumindest teilweise zu schließen, und/oder um ein landwirtschaftliches Gut in dem Boden (B), vorzugsweise im Bereich einer Furche, zu fangen und/oder abzubremsen;
• eine Säeinheit mit zumindest einem Leitungselement, um ein landwirtschaftliches Gut in den Boden (B) einzubringen, vorzugsweise in einer Furche abzulegen.

13. Landwirtschaftliche Arbeitsmaschine (20), vorzugsweise zur Bearbeitung eines Bodens (B) und/oder zur Einbringung eines landwirtschaftlichen Guts in einen Boden (B) und/oder zum Transport eines landwirtschaftlichen Guts,
mit einem Maschinenrahmen (21), welcher an einer Frontseite eine Zug- und/oder Montagevorrichtung (23) aufweist, über welche die Arbeitsmaschine (20) in einem Transportzustand und in einem Betriebszustand in einer Bewegungsrichtung (BR) gezogen werden kann,
wobei an dem Maschinenrahmen (21), vorzugsweise an einer Seite des Maschinenrahmens (21), zumindest eine Tragvorrichtung (10) nach einem der vorhergehenden Ansprüche und zumindest ein Aktuatorelement (211) zur Betätigung einer Koppeleinheit (210) der zumindest einen Tragvorrichtung (10) montiert ist.

14. Arbeitsmaschine (20) nach Anspruch 13,
wobei das zumindest eine Aktuatorelement (211) als Linearaktuator konfiguriert ist oder einen Linearaktuator umfasst, welcher elektrisch, elektromechanisch, pneumatisch oder hydraulisch betätigbar konfiguriert ist, und/oder
wobei das zumindest eine Aktuatorelement (211) konfiguriert ist, die Betätigung der Koppeleinheit (210) mittels zumindest eines Anschlag-Clips einzustellen.

15. Verfahren zur Verstellung zumindest einer Werkzeugeinrichtung (100) einer landwirtschaftlichen Arbeitsmaschine (20) nach Anspruch 13 oder 14,
wobei die Koppeleinheit (210) durch das zumindest eine Aktuatorelement (211) betätigt wird und die Betätigung der Koppeleinheit (210) durch die Koppeleinheit (210) und durch die Stelleinheit (220) umgewandelt wird und in Abhängigkeit der umgewandelten Betätigung die zumindest eine Werkzeugeinrichtung (100) definiert eingestellt wird.
